# EUROPEAN PATENT APPLICATION

(11) **EP 4 734 296 A1**
(43) Date of publication of application: **29.04.2026**
(21) Application number: 25209788.6
(22) Date of filing: 20.10.2025
(51) Int. Cl.: H01R 13/645, H01R 12/70, H05K 5/00, H01R 12/73

(54) **USER CONFIGURABLE KEYABLE GUIDE PIN/MODULE**

(30) Priority: 22.10.2024 US 202463710047 P; 29.05.2025 US 202519221631
(71) Applicant: TE Connectivity Solutions GmbH, 8200 Schaffhausen (CH)
(72) Inventor: GINGRICH III, Charles Raymond, Middletown, 17057 (US); MORRIS, Andrew, Middletown, 17057 (US); MILLER, Keith Edwin, Middletown, 17057 (US); ANNIS, Kyle Gary, Middletown, 17057 (US)
(74) Representative: Ashton, Gareth Mark

(57) **Abstract**

A user configurable keyable guide module (10) for properly positioning a connector in position on a printed circuit board, the user configurable keyable guide module (10) having a housing (12) with one or more keying guide pin receiving openings (26) which extend from a mating face (24) of the housing toward a rear face (30) of the housing. First programmable keying surfaces (46) are provided proximate the one or more keying guide pin receiving openings (26). One or more keying guide pins (18) are configured to be positioned in the one or more keying guide pin receiving openings (26). The one or more keying guide pins (18) have second programmable keying surfaces (60). A user selects the position of the first programmable keying surfaces (46) and the second programmable keying surfaces (60).

## Description

The present invention relates to a user configurable keyable guide pin and module. In particular, the invention relates to keyed guide pins and corresponding receptacles which provide multiple keying options in a reduced width while maintaining robustness.

There are currently various guide hardware which are used to properly position a connector in position on a printed circuit board or the like. Some of the guide hardware includes keying features. However, guide pins with keying features are often large, requiring non insignificant space on the board. In addition, existing guide pins provide only limited programmability, which results in the need for may different part to be produced to accommodate the various keying options.

It would, therefore, be desirable to provide a keying guide pin which has reduced width and is robust, thereby requiring reduced board space. It would also be beneficial to provide a keying guide pin with multiple keying options, thereby reducing the number of different guide pins which must be manufactured and retained in inventory. Accordingly, it is an object to provide a keying guide module with keying guide pins which provide multiple keying options in a reduced width while maintaining robustness.

The solution is provided by a user configurable keyable guide module having a housing with one or more keying guide pin receiving openings which extend from a mating face of the housing toward a rear face of the housing. First programmable keying surfaces are provided proximate the one or more keying guide pin receiving openings. One or more keying guide pins are configured to be positioned in the one or more keying guide pin receiving openings. The one or more keying guide pins have second programmable keying surfaces. A user selects the position of the first programmable keying surfaces and the second programmable keying surfaces.

An embodiment is directed to a user configurable keyable guide module having a housing with one or more keying guide pin receiving openings which extend from a mating face of the housing toward a rear face of the housing. First programmable keying surfaces are provided proximate the one or more keying guide pin receiving openings. One or more keying guide pins are configured to be positioned in the one or more keying guide pin receiving openings. The one or more keying guide pins have second programmable keying surfaces. A user selects the position of the first programmable keying surfaces and the second programmable keying surfaces.

In an embodiment, the housing is dimensioned to have a height which is greater than the width, wherein when mounted to a printed circuit board, the space required for the keyable guide module is minimized

In an embodiment, the first programmable keying surfaces are provided on a front plate which is secured to the housing. The one or more keying guide pin receiving openings of the housing and the one or more keying guide pin keying openings of the front plate are aligned and are stacked on top of each other in the height direction.

In an embodiment, the one or more keying guide pins have base portions, keying guide pin portions and attachment portions. Each of the keying guide pin portions have a generally cylindrical configuration with one portion having the second programmable keying surface.

In an embodiment, the one or more keying guide pin receiving openings have keying member receiving recesses provided at a mating surfaces or mating faces of the housing, the keying member receiving recesses have angled side walls. Keying members are positioned in the keying member receiving recesses, each of the keying members has a keying guide pin keying opening which extends therethrough, the first programmable keying surfaces are provided on keying members.

In an embodiment, keying receiving slots are provided in the housing and extend through the housing into the one or more keying guide pin receiving opening. Keying members with the first programmable keying surfaces are positioned in the keying receiving slots.

The invention will now be described by way of example with reference to the accompanying drawings in which:
FIG. 1 is a perspective view of a first illustrative embodiment of a module with a pair of keying guide pins according to the present invention inserted therein.
FIG. 2 is a perspective view of the module and the keying guide pins of FIG. 1, with the keying guide pins shown in the preinserted position.
FIG. 3 is a perspective view of a pair of keying guide pins with a first illustrative embodiment of a front plate which is exploded from a module housing of the module.
FIG. 4 is a perspective view of a second illustrative embodiment of a front plate that can be used with the module of FIG. 1.
FIG. 5 is a perspective view of a third illustrative embodiment of a front plate that can be used with the module of FIG. 1.
FIG. 6 is a perspective view of a single of keying guide pin with a fourth illustrative embodiment of a front plate that can be used with the module of FIG. 1.
FIG. 7 is a perspective view illustrating the keying guide pins with mounting hardware positioned in the keying guide pins.
FIG. 8 is a representation of different keying slots which may be provided on the printed circuit board to properly position the keying guide pins is desired orientations.
FIG. 9 is a perspective view of a second illustrative embodiment of a module with keying guides provided on a mating face of the module.
FIG. 10 is a perspective view of the module of FIG. 9, with the keying guides and mounting hardware exploded from the housing of the module.
FIG. 11 is a perspective view of the module of FIG. 9, with keying guide pins shown in the preinserted position.
FIG. 12 is a perspective view of a third illustrative embodiment of a module with keying guides, with the keying guides and mounting hardware exploded from the housing of the module.
FIG. 13 is a perspective view of the module of FIG. 12, with keying guide pins shown in the preinserted position.
FIG. 14 is a perspective view of a fourth illustrative embodiment of a module with a pair of keying guide pins partially inserted therein, the module having slots which allow keying guides to be inserted therein.
FIG. 15 is a perspective view of a fifth illustrative embodiment of a module with a keying guide member inserted therein.
FIG. 16 is a perspective view of the keying guide member of FIG. 15.

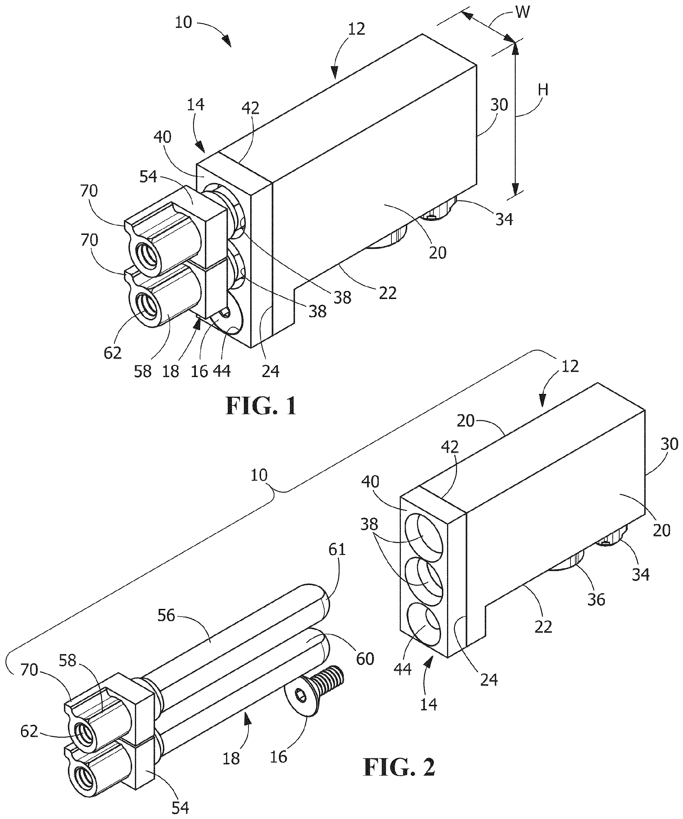

As shown in FIGS. 1 and 2, a first illustrative keying guide module 10 has a housing 12, a front plate 14, mounting hardware 16 and one or more keying guide members or pins 18. In the illustrative embodiment shown, the front plate 14 is attached to the housing 12 by mounting hardware 16, but the front plate 14 may be attached to the housing 12 by other known methods, such as, but not limited to, projections extending from the front plate that are received in slots of the housing 12.

The keying guide module 10 may be provided next to or attached to an electrical connector assembly (not shown). One or more keying guide modules 10 are positioned for aligning the connector subassembly with a mating connector subassembly (not shown). The mating connector assembly may be, but is not limited to, a circuit board having a plurality of connector modules having a plural contacts.

In the illustrative embodiment shown in FIGS. 1 through 3, the housing 12 is dimensioned to have a width W and a height H. When moved into engagement with the circuit board, it is beneficial for the width W to be minimized such that the space required on the surface of the circuit board is minimized. In the illustrative embodiment shown, the width W is approximately 5 mm or less. This is a significant reduction in width compared to known guide module which have a width of 9 mm or more.

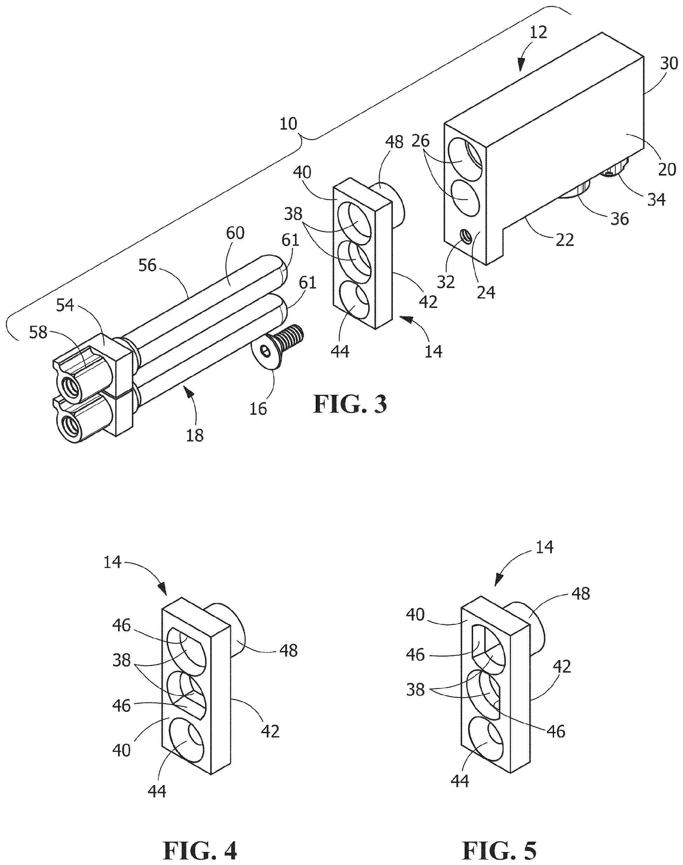

As shown in FIG. 3, the housing 12 of the keying guide module 10 includes side surfaces 20, a daughtercard receiving surface 22, and a face plate receiving surface 24. The daughtercard receiving surface 22 and the face plate receiving surface 24 extend between the side surface 22. In the embodiment shown, the daughtercard receiving surface 22 extends a plane which essentially perpendicular to the plane of the face plate receiving surface 24. However, other configurations may be used.

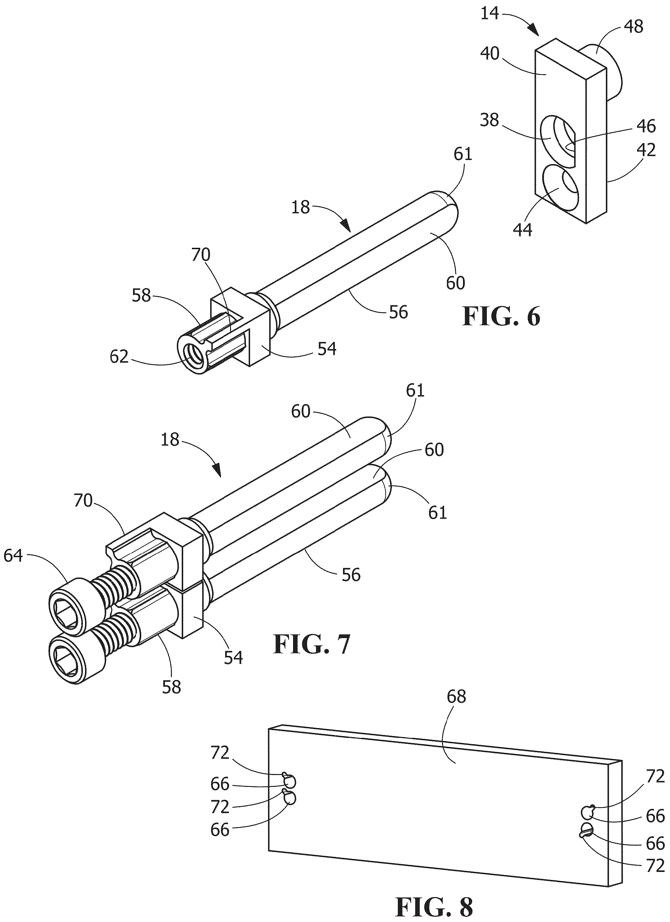

One or more keying guide pin receiving openings 26 extend from the face plate receiving surface 24 is a direction toward a rear face 30 of the housing 12. In the illustrative embodiment shown inn FIGS. 1 through 5 and 7, two keying guide pin receiving openings 26 are shown. In the illustrative embodiment shown in FIG. 6, one keying guide pin receiving opening 26 is shown. The keying guide pin receiving openings 26 are stacked on top of each other, in the height H direction. A mounting opening 32 is also provided in the face plate receiving surface 24. The mounting opening 32 is positioned in line with the keying guide receiving openings 26 and is dimensioned to receive the mounting hardware 16 therein.

In the embodiment shown, the daughtercard receiving surface 22 has a locating projection 34 and a threaded opening 36. The locating projection 34 and the threaded opening 36 are used to properly locate and mount the daughter card to the keying guide module 10.

As shown in FIGS. 1 through 6, the front plate 14 has one or more keying guide pin keying openings 38 which extend from a mating surface 40 to a mounting surface 42. The keying guide pin keying openings 38 are stacked on top of each other, in the height H direction. The keying guide pin keying openings 38 are positioned in alignment with the keying guide pin receiving openings 26 of the housing 12.

A mounting opening 44 extends through the front plate 14. The mounting opening 44 is positioned in line with the keying guide pin keying openings 38 and in alignment with the mounting opening 32 of the housing 12. The mounting opening 28 is dimensioned to receive the mounting hardware 16 therein.

As shown in FIGS. 3 through 6, each of the keying guide pin keying openings 38 have a generally circular configuration with one portion have a different configuration, such as a flat or planar keying surface 46. The keying surface 46 may be located at different positions in the keying guide pin keying openings 38, as illustrated in the different embodiments of the front plate 14 shown in FIGS. 3 through 6.

A positioning projection 48 extends from the mounting surface 42 of the front plate 14 in a direction away from the mating surface 40. The positioning projection 48 is configured to be received in a respective keying guide pin receiving opening 26 of the housing 12. The positioning projection 48 facilitates the proper positioning of the front plate 14 relative to the housing 12 when the front plated 14 is assembled to the housing 12.

The keying guide pins 18 include base portions 54, keying guide pin portions 56 and attachment portions 58.

Each of the keying guide pin portions 56 have a generally cylindrical configuration with one portion have a different configuration, such as a flat or planar keying surface 60. Keying guide pin portions 56 include rounded, beveled or chamfered surfaces 62 at the end thereof, which facilitate alignment and prevent the stubbing of the keying guide pins 18 with the keying guide pin keying opening 38 when the keying guide pins 18 are inserted into the keying guide pin keying opening 38.

Attachment sections 58 include threaded openings 62 for receipt of mounting hardware 64 therein. The mounting hardware 64 extends through openings 66 in the circuit board 68 to mount the keying guide pins 18 to the circuit board 68. Other alternative to mounting the keying guide pins 18 to the circuit board 68 may be used, such as using threaded studs extending from base portions 54.

The base portions 54 have alignment projections 70 which extend from the base portions 54 in a direction away from the keying guide pin portions 56. The alignment projections 70 are positioned in alignment slots 72 (shown in FIG. 8) which extend from the openings 66 of the circuit board 68.

Referring to FIGS. 1 through 8, each of the keying guide pins 18 can be clocked or rotated to four positions, which correspond to the four locations of the alignment slots 72 in the printed circuit board 68. When two keying guide pins 18 are used, the lower keying guide pin 18 is connected to the lover band in the keying guide module 10 and the upper keying guide pin 18 provides additional keying options, as both keying guide pins 18 can be positioned in four independent positions.

The use of two keying guide pins 18, which are positioned in line with each other and stacked on top of each other in the height H direction, allows the keying module 10 to properly position the housing 12, and its associated connector assembly, and the keying guide pins 18, and its associated mating connector assembly. The configuration of the keying guide module 10 and the keying guide pins 18 occupies minimal board space, thereby freeing up valuable board real estate for other components.

As previously described, the keying guide pins 18 have planar keying surfaces 60 which define the keying profile. The keying guide module 10 has complementary planar keying surfaces 46 in the receiving opening 38 for receiving the keying guide pins 18. The use of the keying guide pins 18 and the keyed front plates 14 allows the proper keying to be done by the customer, as the keying guide pins 18 and the keyed front plates 14 can be programmed by rotating the keying guide pins 18 and by selecting the appropriate front plate 14 to be mounted to the housing 14 of the keying guide module 10.

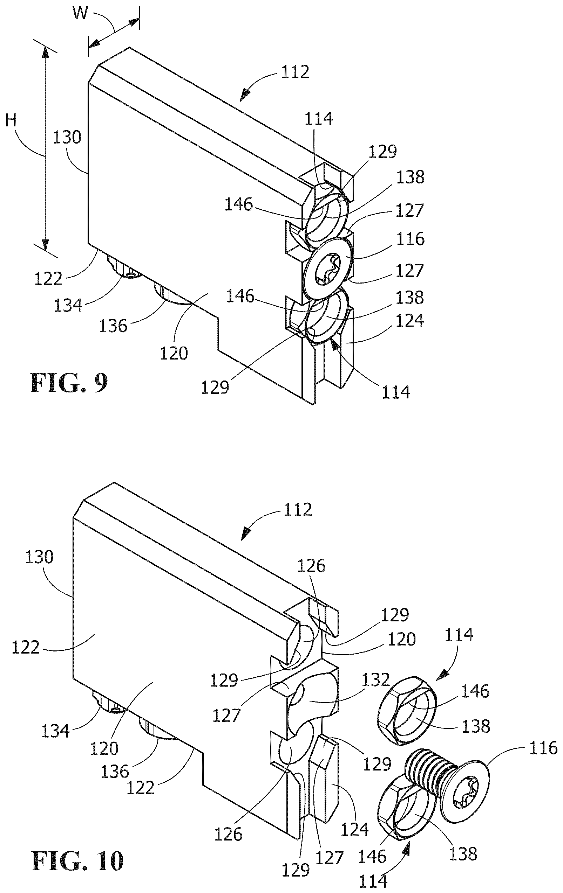

Referring to FIGS. 9 through 11, a second illustrative embodiment of a keying guide module 110 is shown. In this illustrative embodiment, the keying guide pins 118 are essentially the same as guide pins 18. Therefore, the description of the keying guide pins will not be repeated.

The housing 112 is dimensioned to have a width W and a height H. When moved into engagement with the circuit board, it is beneficial for the width W to be minimized such that the space required on the surface of the circuit board is minimized. In the illustrative embodiment shown, the width W is approximately 5 mm or less. This is a significant reduction in width compared to known guide module which have a width of 9 mm or more.

The housing 112 of the keying guide module 110 includes side surfaces 120, a daughtercard receiving surface 122, and mating surface or face 124. The daughtercard receiving surface 122 and the mating surface 124 extend between the side surface 122. In the embodiment shown, the daughtercard receiving surface 122 extends a plane which essentially perpendicular to the plane of the face plate receiving surface 124. However, other configurations may be used.

One or more keying guide pin receiving opening 126 extend from the mating surface 124 is a direction toward a rear face 130 of the housing 112. In the illustrative embodiment shown inn FIGS. 9 through 11, two keying guide pin receiving openings 126 are shown. The keying guide pin receiving openings 126 are stacked on top of each other, in the height H direction. A mounting opening 132 is also provided in the mating surface 124. The mounting opening 132 is positioned in line with and between the keying guide receiving openings 126. The mounting opening 132 is dimensioned to receive the mounting hardware 116 therein.

The one or more keying guide pin receiving openings 126 have keying member receiving recesses 127 provided at the mating surface 124. The keying member receiving recesses 127 have angled side walls 129.

In the embodiment shown, the daughtercard receiving surface 122 has a locating projection 134 and a threaded opening 136. The locating projection 134 and the threaded opening 136 are used to properly locate and mount the daughter card to the keying guide module 110.

Keying members 114 are positioned in the keying member receiving recesses 127. Each of the keying members 114 has a keying guide pin keying opening 138 which extends therethrough. The keying members 114 are stacked on top of each other, in the height H direction. The keying guide pin keying openings 138 are positioned in alignment with the keying guide pin receiving openings 126 of the housing 112.

In the embodiment shown, the keying members 114 have a hexagonal configuration. The angled exterior side walls of the hexagonal keying members 114 cooperate with the angled side wall 129 of the keying member receiving recesses 127 to properly position the keying members 114 in the keying member receiving recesses 127. The keying members 114 are held in position by the mounting hardware 116.

Each of the keying guide pin keying openings 138 have a generally circular configuration with one portion have a different configuration, such as a flat or planar keying surface 146. The keying surfaces 146 may be located at different positions in the keying guide pin keying openings 138.

Each of the keying guide pins 118 can be clocked or rotated to four positions, as previously described with respect to pins 18. When two keying guide pins 118 are used, they provide additional keying options, as both keying guide pins 118 can be positioned in four independent positions.

The use of two keying guide pins 118 which are positioned in line with each other and stacked on top of each other in the height H direction, allows the keying guide module 110 to properly position the housing 112, and its associated connector assembly, and the keying guide pins 118, and its associated mating connector assembly. The configuration of the keying guide module 110 and the keying guide pins 118 occupies minimal board space, thereby freeing up valuable board real estate for other components.

The keying guide pins 118 have planar keying surfaces 160 which define the keying profile. The keying guide module 110 has complementary planar keying surfaces 146 in the receiving opening 138 of the keying members 114 for receiving the keying guide pins 118. The use of the keying guide pins 118 and the keying members 114 allows the proper keying to be done by the customer, as the keying guide pins 118 and the keying members 114 can be programmed by rotating the keying guide pins 118 and by selecting the appropriate position for the keying members 114 of the keying guide module 110.

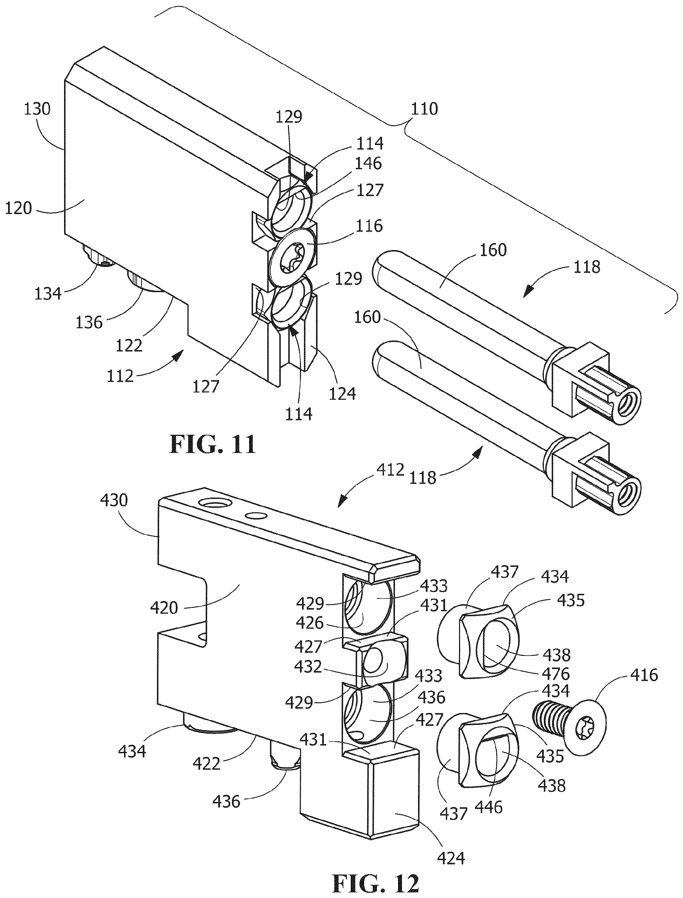

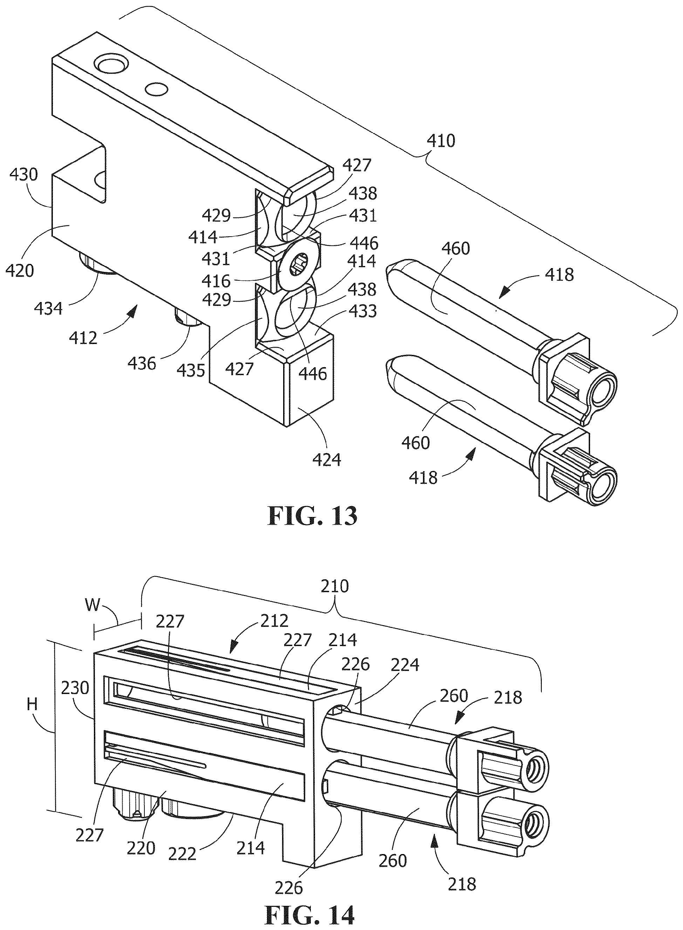

FIGS. 12 and 13 illustrate a third illustrative embodiment of a keying guide module 410. In this illustrative embodiment, the keying guide pins 418 are essentially the same as guide pins 18 and guide pins 118. Therefore, the description of the keying guide pins will not be repeated.

The housing 412 is dimensioned to have a width W and a height H. When moved into engagement with the circuit board, it is beneficial for the width W to be minimized such that the space required on the surface of the circuit board is minimized. In the illustrative embodiment shown, the width W is approximately 5 mm or less. This is a significant reduction in width compared to known guide module which have a width of 9 mm or more.

The housing 412 of the keying guide module 410 includes side surfaces 420, a daughtercard receiving surface 422, and mating surface or face 424. The daughtercard receiving surface 422 and the mating surface 424 extend between the side surface 422. In the embodiment shown, the daughtercard receiving surface 422 extends a plane which essentially perpendicular to the plane of the face plate receiving surface 424. However, other configurations may be used.

One or more keying guide pin receiving opening 426 extend from the mating surface 424 is a direction toward a rear face 430 of the housing 412. In the illustrative embodiment shown inn FIGS. 12 and 13, two keying guide pin receiving openings 426 are shown. The keying guide pin receiving openings 426 are stacked on top of each other, in the height H direction. A mounting opening 432 is also provided in the mating surface 124. The mounting opening 432 is positioned in line with and between the keying guide receiving openings 426. The mounting opening 432 is dimensioned to receive the mounting hardware 416 therein.

The one or more keying guide pin receiving openings 426 have keying member receiving recesses 427 provided at the mating surface 424. The keying member receiving recesses 427 have top walls 429 and bottom walls 431. The top walls 429 and the bottom walls 431 extend in planes which are essentially parallel to each other. Portions 433 of the keying member receiving recesses 427 extend from the mating surface 424 into the keying guide pin receiving openings 426.

In the embodiment shown, the daughtercard receiving surface 422 has a locating projection 434 and a threaded opening 436. The locating projection 434 and the threaded opening 436 are used to properly locate and mount the daughter card to the keying guide module 410.

Keying members 414 are positioned in the keying member receiving recesses 427. Each of the keying members 414 has a keying guide pin keying opening 438 which extends therethrough. The keying members 414 are stacked on top of each other, in the height H direction. The keying guide pin keying openings 438 are positioned in alignment with the keying guide pin receiving openings 426 of the housing 412.

In the embodiment shown, the keying members 414 have first portions 435 and second portions 437. The first portions have square configurations. The flat exterior side walls of the square first portions 435 of the keying members 414 cooperate with the top walls 429 and bottom wall 431 of the keying member receiving recesses 427 to properly position the keying members 414 in the keying member receiving recesses 427. The second portions 437 extend from the first portions 435 and have generally cylindrical configurations. The exterior walls of the second portions 437 are dimensioned to be received in the portions 433 of the keying member receiving recesses 427. The keying members 414 are held in position by the mounting hardware 416.

Each of the keying guide pin keying openings 438 have a generally circular configuration with one portion have a different configuration, such as a flat or planar keying surface 446. The keying surfaces 446 may be located at different positions in the keying guide pin keying openings 438.

Each of the keying guide pins 418 can be clocked or rotated to four positions, as previously described with respect to pins 18 and pins 118. When two keying guide pins 418 are used, they provide additional keying options, as both keying guide pins 418 can be positioned in four independent positions.

The use of two keying guide pins 418 which are positioned in line with each other and stacked on top of each other in the height H direction, allows the keying guide module 410 to properly position the housing 412, and its associated connector assembly, and the keying guide pins 418, and its associated mating connector assembly. The configuration of the keying guide module 410 and the keying guide pins 418 occupies minimal board space, thereby freeing up valuable board real estate for other components.

The keying guide pins 418 have planar keying surfaces 460 which define the keying profile. The keying guide module 410 has complementary planar keying surfaces 446 in the receiving opening 438 of the keying members 414 for receiving the keying guide pins 418. The use of the keying guide pins 418 and the keying members 414 allows the proper keying to be done by the customer, as the keying guide pins 418 and the keying members 414 can be programmed by rotating the keying guide pins 418 and by selecting the appropriate position for the keying members 414 of the keying guide module 410.

FIG. 14 illustrates a fourth illustrative embodiment of a keying guide module 210. In this illustrative embodiment, the keying guide pins 218 are essentially the same as guide pins 50. Therefore, the description of the keying guide pins will not be repeated.

The housing 212 is dimensioned to have a width W and a height H. When moved into engagement with the circuit board, it is beneficial for the width W to be minimized such that the space required on the surface of the circuit board is minimized. In the illustrative embodiment shown, the width W is approximately 5 mm or less. This is a significant reduction in width compared to known guide module which have a width of 9 mm or more.

The housing 212 of the keying guide module 210 includes side surfaces 220, a daughtercard receiving surface 222, and mating surface or face 224. The daughtercard receiving surface 222 and the mating surface 224 extend between the side surface 222. In the embodiment shown, the daughtercard receiving surface 222 extends a plane which essentially perpendicular to the plane of the face plate receiving surface 224. However, other configurations may be used.

One or more keying guide pin receiving opening 226 extend from the mating surface 224 is a direction toward a rear face 230 of the housing 212. Two keying guide pin receiving openings 226 are shown. The keying guide pin receiving openings 226 are stacked on top of each other, in the height H direction.

Keying receiving slots 227 are provided in the housing 212 and extend through the housing into the one or more keying guide pin receiving opening 226. The keying receiving slots 227 extend parallel to a longitudinal axis of each keying receiving slots 227. More than one keying receiving slots 227 extends into each keying guide pin receiving opening 226. Keying members 214 are positioned in one respective keying receiving slots 227 of each of the keying guide pin receiving opening 226 through the keying receiving slots 227.

Each of the keying guide pins 218 can be clocked or rotated to four positions, as previously described with respect to pins 50. When two keying guide pins 218 are used, they provide additional keying options, as both keying guide pins 218 can be positioned in four independent positions.

The use of two keying guide pins 218 which are positioned in line with each other and stacked on top of each other in the height H direction, allows the keying guide module 210 to properly position the housing 212, and its associated connector assembly, and the keying guide pins 218, and its associated mating connector assembly. The configuration of the keying guide module 210 and the keying guide pins 218 occupies minimal board space, thereby freeing up valuable board real estate for other components.

The keying guide pins 218 have planar keying surfaces 260 which define the keying profile. The keying guide module 210 has complementary keying members 214 positioned in respective keying receiving slots 227 of each of the keying guide pin receiving opening 226 for receiving the keying guide pins 218. The use of the keying guide pins 218 and the keying members 214 allows the proper keying to be done by the customer, as the keying guide pins 218 and the keying members 214 can be programmed by rotating the keying guide pins 218 and by selecting the appropriate position for the keying members 214 of the keying guide module 210.

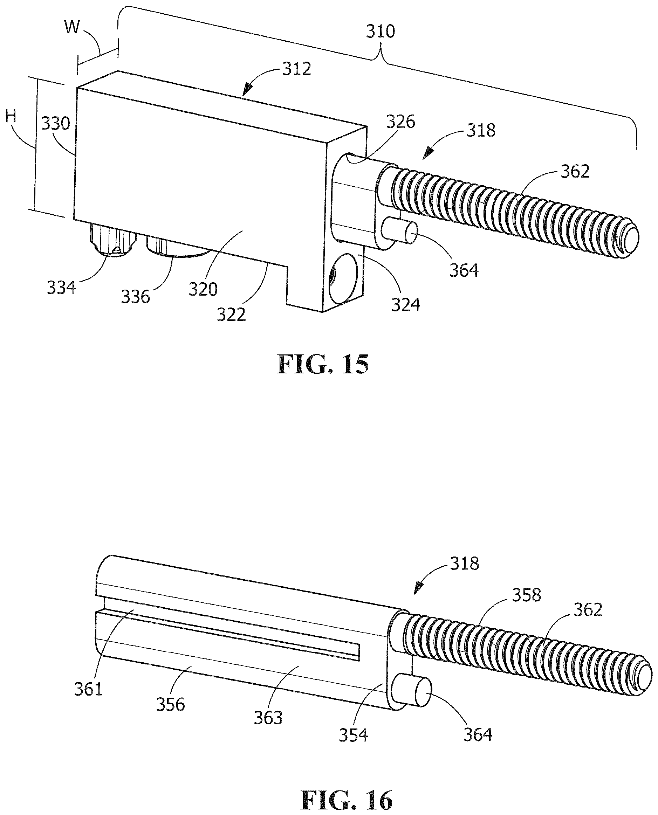

FIGS. 15 and 16 show a fifth illustrative embodiment. In this embodiment, an illustrative keying guide module 310 has a housing 312 and a keying guide member 318.

The housing 312 is dimensioned to have a width W and a height H. When moved into engagement with the circuit board, it is beneficial for the width W to be minimized such that the space required on the surface of the circuit board is minimized. In the illustrative embodiment shown, the width W is approximately 5 mm or less. This is a significant reduction in width compared to known guide module which have a width of 9 mm or more.

The housing 312 of the keying guide module 310 includes side surfaces 320, a daughtercard receiving surface 322, and a mating surface or face 324. The daughtercard receiving surface 322 and the mating 324 extend between the side surface 322. In the embodiment shown, the daughtercard receiving surface 322 extends a plane which essentially perpendicular to the plane of the face plate receiving surface 324. However, other configurations may be used.

A keying guide receiving opening 326 extend from the mating surface 324 is a direction toward a rear face 330 of the housing 312. The keying guide pin receiving openings 326 has a height H1 which is larger than the width W1, creating an oval shaped opening. One or more keying projections (not shown) are provided in the keying guide receiving opening 326. The keying projections extend along a length of the keying guide receiving opening 326 in the direction of the longitudinal axis of the keying guide receiving opening 326.

In the embodiment shown, the daughtercard receiving surface 322 has a locating projection 334 and a threaded opening 336. The locating projection 334 and the threaded opening 336 are used to properly locate and mount the daughter card to the keying guide module 310.

The keying guide member 318 include base portions 354, keying guide portion 356 and attachment portions 358. Attachment section 358 includes a threaded studs 362 and an alignment projection 364 extending from base portions 354.

The keying guide portion 356 has one or more keying slots 361 which are provided in side walls 363. The keying slots 361 extend along a length of the keying guide portion 356 in the direction of the longitudinal axis of the keying guide portion 356.

The use of the keying guide member 318 allows the keying guide module 310 to properly position the housing 312, and its associated connector assembly, and the keying guide member 318, and its associated mating connector assembly. The configuration of the keying guide module 310 and the keying guide pins 318 occupies minimal board space, thereby freeing up valuable board real estate for other components.

## Claims

1. A user configurable keyable guide module (10) comprising:
a housing (12) having one or more keying guide pin receiving openings (26) extending from a mating face (24) of the housing toward a rear face (30) of the housing;
first programmable keying surfaces (46) provided proximate the one or more keying guide pin receiving openings (26);
one or more keying guide pins (18) configured to be positioned in the one or more keying guide pin receiving openings (26), the one or more keying guide pins (18) have second programmable keying surfaces (60);
wherein a user selects the position of the first programmable keying surfaces (46) and the second programmable keying surfaces (60).

2. The user configurable keyable guide module (10) as recited in claim 1, wherein the housing (12) is dimensioned to have a height (H) which is greater than the width (W), wherein when mounted to a printed circuit board, the space required for the keyable guide module is minimized

3. The user configurable keyable guide module (10) as recited in claim 2, wherein the width (W) is approximately 5 mm or less.

4. The user configurable keyable guide module (10) as recited in claim 1, 2 or 3 wherein the first programmable keying surfaces (46) are provided on a front plate (14) which is secured to the housing (12).

5. The user configurable keyable guide module (10) as recited in claim 4, wherein the front plate (14) has one or more keying guide pin keying openings (38) which extend from a mating surface (40) of the front plate to a mounting surface (42) of the front plate.

6. The user configurable keyable guide module (10) as recited in claim 5, wherein the one or more keying guide pin receiving openings (26) of the housing and the one or more keying guide pin keying openings (38) of the front plate are aligned and are stacked on top of each other in the height direction (H).

7. The user configurable keyable guide module (10) as recited in claim 5 or 6, wherein a mounting opening (44) extends through the front plate, the mounting opening (44) is positioned in line with the keying guide pin keying openings (38) and in alignment with a mounting opening (32) of the housing.

8. The user configurable keyable guide module (10) as recited in claim 5, 6 or 7, wherein the keying guide pin keying openings (38) of the front plate have generally circular configurations with one portion having the first programmable keying surfaces (46).

9. The user configurable keyable guide module (10) as recited in any preceding claim, wherein the first programmable keying surfaces (46) are flat or planar keying surfaces.

10. The user configurable keyable guide module (10) as recited in claim 5 or any claim dependent thereon, wherein a positioning projection (48) extends from the mounting surface (42) of the front plate in a direction away from the mating surface (40), the positioning projection (48) is configured to be received in a respective keying guide pin receiving opening (26) of the housing.

11. The user configurable keyable guide module (10) as recited in any preceding claim, wherein the one or more keying guide pins (18) have base portions (54), keying guide pin portions (56) and attachment portions (58).

12. The user configurable keyable guide module (10) as recited in claim 11, wherein each of the keying guide pin portions (56) have a generally cylindrical configuration with one portion having the second programmable keying surface (60).

13. The user configurable keyable guide module (10) as recited in any preceding claim, wherein the second programmable keying surfaces (60) are flat or planar keying surfaces.

14. The user configurable keyable guide module (10) as recited in claim 11 or any claim dependent thereon, wherein the base portions (54) have alignment projections (70) which extend from the base portions in a direction away from the keying guide pin portions (56), the alignment projections (70) are positioned in alignment slots (72) which extend from openings of a circuit board (68) to which the one or more keying guide pins (18) are mounted.

15. The user configurable keyable guide module (110) as recited in any preceding claim, wherein the one or more keying guide pin receiving openings (126) have keying member receiving recesses (127) provided at the mating face (124) of the housing (112).
